# FASCICULE DE BREVET EUROPEEN

(11) **EP 1 355 098 B1**
(45) Date de publication et mention de la délivrance du brevet: **24.01.2007**
(21) Numéro de dépôt: 03290644.8
(22) Date de dépôt: 14.03.2003
(51) Int. Cl.: F16L 9/12, F16L 11/12

(54) **Conduit de fluide pour véhicule automobile**
Fluidleitung zur Anwendung in Kraftfahrzeugen
Fluid conduit for use in vehicles

(30) Priorité: 15.04.2002 FR 0204672
(43) Date de publication de la demande: 22.10.2003
(73) Titulaire: NOBEL PLASTIQUES, 78300 Poissy (FR)
(72) Inventeur: Milhas, Pierre, 51300 Vitry-Le-Francois (FR)
(74) Mandataire: Robert, Jean-Pierre

(56) Documents cités:
- EP-A- 0 754 897
- DE-A- 4 315 177
- FR-A- 2 766 548

## Description

La présente invention concerne un tube multicouche résistant à une température élevée et présentant de bonnes qualités d'imperméabilité à l'égard du fluide transporté, notamment du carburant pour véhicule automobile.

### ARRIERE PLAN DE L'INVENTION

Dans le domaine des conduites de carburant en matière plastique, les exigences relatives aux qualités mécaniques et chimiques des matériaux employés sont de plus en plus élevées. Les tubes en effet doivent présenter une perméabilité quasiment nulle aux composants du carburant tout en présentant une stabilité mécanique la plus grande possible à des températures de plus en plus élevées.

Les recherches et développements dans ce domaine ont conduit à réaliser des tubes multicouche par coextrusion ou extrusion successives de plusieurs matériaux plastiques dont chacun est performant à l'égard d'une des exigences à satisfaire. On procède à l'addition des qualités de chacune des couches.

L'état de la technique comprend ainsi de multiples exemples de combinaison de matériaux en trois ou cinq couches successives, l'une des couches présentant une bonne imperméabilité à l'égard du carburant, une autre jouant le rôle d'armature mécanique pour la tenue dans le temps et en température, une autre formant une protection efficace du tube à l'égard des agressions extérieures, d'autres enfin formant des adhésifs entre les différentes couches dont la compatibilité n'est pas nécessairement naturelle, compte tenu de la nature des matériaux utilisés (polyamide, polyéthylène, mélange des deux matières, polyester, élastomère, élastomère thermoplastique, PTFE, PVDF, polychlorure de vinyle...).

Il faut noter également que la plupart des solutions proposées par l'état de la technique ne satisfont généralement pas correctement d'autres contraintes qui sont soit dimensionnelles soit économiques. Ainsi, certains tubes multicouches ne possèdent les qualités requises que dans des épaisseurs qui confèrent au tube un poids ou un encombrement qui est difficilement admis par un constructeur. Par ailleurs, ces solutions ou d'autres mettent en oeuvre des matériaux nobles donc de prix élevé, qui constituent un frein économique à leur emploi.

On citera par exemple le document FR 2 766 548 qui décrit un tube avec à l'intérieur une couche de polyphtalamide et à l'extérieur une couche en élastomère ou une couche thermoplastique. L'un des inconvénients de ce produit réside dans la raideur de la couche interne qui nuit à la qualité des liaisons d'extrémités.

La recherche de solutions doit donc prendre en compte les impératifs qui vont au-delà des performances techniques pures et chaque tube est un compromis précis répondant de manière jugée optimale aux différentes exigences, quelquefois opposées, de la réglementation et du marché.

### OBJET DE L'INVENTION

Dans ce contexte, l'invention a pour objet un tube multicouche comportant au moins une couche interne, une couche intermédiaire et une couche externe, dans lequel la couche intermédiaire est formée par un polyphtalamide (PPA). Le polyphtalamide est un matériau qui possède la qualité d'être très stable dimensionnellement même après un cycle sévère de vieillissement. En outre placer la couche en polyphtalamide en sandwich entre deux couches permet d'en diminuer l'épaisseur sans nuire à sa tenue et sa fonction barrière, ce qui donne la possibilité de fabriquer des tubes flexibles et faciles à former.

### DESCRIPTION DE L'INVENTION

Dans le tube selon l'invention, la couche interne est en un matériau choisi parmi les matériaux suivants : polyamide 6 (PA6) ou polyester (PBT, PBTP, PET) ou copolyester (polyester éther, poly éther éther, poly éther ester). De préférence, cette couche interne a subi un traitement de stabilisation en regard de la chaleur. Elle peut posséder une charge ou être d'un grade la rendant conductive ou semi-conductive, c'est-à-dire de résistivité inférieure à un million d'ohms par centimètre.

La couche externe est prévue en un matériau choisi parmi les thermoplastiques élastomères tels que le TPEE dont un exemple est sur le marché sous la marque ARNITE de la société DSM ou un polyamide tel qu'un PA12 ou un PA6.36 résistant au chlorure de zinc.

Dans le cas où le cahier des charges exige que les différentes couches soient réellement adhérentes entre elles, on peut prévoir entre la couche interne et la couche intermédiaire d'une part et la couche intermédiaire et la couche externe d'autre part, une couche d'adhésif capable de lier la couche interne et la couche externe à la couche intermédiaire en polyphtalamide.

Pour ce qui concerne la liaison entre la couche interne et la couche intermédiaire, cet adhésif sera choisi parmi les matériaux suivants : une colle « hot melt » polyuréthane ou une colle extrudable copolyamide du type de celle présente sur le marché sous la marque commerciale PLATAMID de la société ATOFINA ; un mélange de l'un des polymères qui forme soit la couche interne soit la couche intermédiaire et d'un polyacétate-uréthane susceptible d'être extrudable ou enfin d'un mélange d'un adhésif polymère et des deux polymères à rendre solidaires c'est-à-dire le polyamide ou le polyester de la couche interne et le polyphtalamide de la couche intermédiaire.

Pour ce qui concerne la liaison entre la couche intermédiaire et la couche externe, l'adhésif sera soit une colle polyuréthane soit un mélange polyphtalamide thermoplastique élastomère.

On indiquera enfin que les épaisseurs des différentes couches du tube multicouche selon l'invention seront :
- pour la couche interne comprises entre 0,05 et 0,5 mm avec une valeur préférée à 0,35 mm,
- pour la couche intermédiaire comprises entre 0,05 et 0,5 mm avec une valeur préférée de 0,2 mm,
- pour la couche externe comprises entre 0,05 et 0,65 mm avec une valeur préférée égale à 0,35 mm,
- pour la couche de liaison la plus intérieure comprises entre 0,05 et 0,2 mm avec une valeur préférée à 0,1 mm,
- et pour la couche de liaison la plus extérieure, comprise entre 0,05 et 0,2 mm avec une valeur préférée égale à 0,1 mm.

Le matériau polyphtalamide, mis sur le marché par la société AMOCO par exemple, présente également une capacité à former barrière à l'égard des constituants du carburant qui est, dans les épaisseurs considérées, vingt cinq fois supérieure aux polyamides et quinze fois supérieure aux polyvinylidènes fluorides (PVDF).

On constate qu'un tel tube possède une très bonne imperméabilité qui est supérieure à celle obtenue avec des solutions mettant en oeuvre des polymères fluorés qui sont difficilement extrudables et extrêmement coûteux. En outre, des essais ont montré qu'un tube tel que celui de l'invention possédait une bonne tenue en températures jusqu'à 160° si les matériaux utilisés ont subi un traitement de stabilisation à l'égard de la chaleur.

Enfin, ce tube convient non seulement aux carburants, essence ou gazole mais également aux huiles utilisées dans les véhicules automobiles.

On notera enfin que le tube multicouche de l'invention peut en plus être recouvert d'une couche d'élastomère ou de thermoplastique pour sa protection au feu ou sa protection à l'égard du milieu extérieur.

## Revendications

1. Tube multicouche comportant au moins une couche interne, une couche intermédiaire, et une couche externe, **caractérisé en ce que** la couche interne est choisie parmi les matériaux suivants : polyamide 6 (PA6) ou polyester (PBT, PBTP, PET) ou copolyester (polyester éther, polyéther éther, polyéther ester) et **en ce que** la couche intermédiaire est formée par un polyphtalamide.

2. Tube multicouche selon la revendication 1, **caractérisé** la couche externe est choisie parmi les matériaux comprenant du thermoplastique élastomère (TPEE) ou les polyamides (PA12, PA6.36).

3. Tube selon l'une quelconque des revendications précédentes, **caractérisé en ce qu**'il comporte une couche de liaison entre la couche interne et la couche intermédiaire choisie parmi les matériaux suivants : colle « hot melt » polyuréthane, colle extrudable copolyamide, mélange d'un polymère appartenant aux polyamides ou polyesters ou polyphtalamides formant les couches à lier, et d'un polyacétate uréthane extrudable.

4. Tube selon l'une quelconque des revendications précédentes, **caractérisé en ce qu**'il comporte une couche de liaison entre la couche intermédiaire et la couche externe choisie parmi les colles polyuréthanes ou un mélange de polyphtalamide ou thermoplastique élastomère.

5. Tube selon l'une quelconque des revendications précédentes, **caractérisé en ce que** les épaisseurs des différentes couches sont :
- pour la couche interne comprises entre 0,05 et 0,5 mm avec une valeur préférée à 0,35 mm,
- pour la couche intermédiaire comprises entre 0,05 et 0,5 mm avec une valeur préférée de 0,2 mm,
- pour la couche externe comprises entre 0,05 et 0,65 mm avec une valeur préférée égale à 0,35 mm,
- pour la couche de liaison la plus intérieure comprises entre 0,05 et 0,2 mm avec une valeur préférée à 0,1 mm,
- et pour la couche de liaison la plus extérieure, comprise entre 0,05 et 0,2 mm avec une valeur préférée égale à 0,1 mm.

## Claims

1. A multilayer tube comprising at least an inner layer, an intermediate layer, and an outer layer, **characterized in that** the inner layer is selected from the following materials: polyamide 6 (PA6) or polyester (PBT, PBTP, PET), or copolyester (polyester ether, polyether ether, polyether ester) and **in that** the intermediate layer is made of a polyphthalamide.

2. A tube according to claim 1, **characterized in that** the outer layer is selected from the materials comprising thermoplastic elastomer (TPEE) or polyamides (PA12, PA6.36).

3. A tube according to any preceding claim, **characterized in that** it includes a bonding layer between the inner layer and the intermediate layer, the bonding layer being selected from the following materials: polyurethane hotmelt adhesive, extrudable copolyamide adhesive, a mixture of a polymer belonging to the polyamides or the polyesters or the polyphthalamides forming the layers to be bonded together, and an extrudable urethane polyacetate.

4. A tube according to any preceding claim, **characterized in that** it has a bonding layer between the intermediate layer and the outer layer, the bonding layer being selected from polyurethane adhesives or a mixture of polyphthalamide or thermoplastic elastomer.

5. A tube according to any preceding claim, **characterized in that** the thicknesses of the various layers are as follows:
· for the inner layer, in the range 0.05 mm to 0.5 mm, with a preferred value of 0.35 mm;
· for the intermediate layer, in the range 0.05 mm to 0.5 mm, with a preferred value of 0.2 mm;
· for the outer layer, in the range 0.05 mm to 0.65 mm, with a preferred value equal to 0.35 mm;
for the inner bonding layer, in the range 0.05 mm to 0.2 mm, with a preferred value of 0.1 mm; and
· for the outer bonding layer, in the range 0.05 mm to 0.2 mm, with a preferred value equal to 0.1 mm. formed by a polyphthalamide.

## Patentansprüche

1. Mehrschichtige Leitung, umfassend mindestens eine Innenschicht, eine Zwischenschicht und eine Außenschicht, **dadurch gekennzeichnet, dass** die Innenschicht aus den folgenden Materialien ausgewählt wird: Polyamid 6 (PA6) oder Polyester (PBT, PBTP, PET) oder Copolyester (Polyesterether, Polyetherether, Polyetherester) und dass die Zwischenschicht aus einem Polyphtalamid gebildet wird.

2. Mehrschichtige Leitung nach Anspruch 1, **dadurch gekennzeichnet, dass** die Außenschicht aus den Materialien ausgewählt wird, die thermoplastisches Elastomer (TPE-E) oder Polyamide (PA12, PA6.36) umfassen.

3. Leitung nach einem der vorhergehenden Ansprüche, **dadurch gekennzeichnet, dass** sie zwischen der Innenschicht und der Zwischenschicht eine Verbindungsschicht umfasst, die aus den folgenden Materialien ausgewählt wird: Polyurethan-Hotmelt-Kleber, extrudierbarer Copolyamid-Kleber, eine Mischung aus einem Polymer, das zu den Polyamiden oder Polyestern oder Polyphtalamiden gehört, welche die zu verbindenden Schichten bilden, und einem extrudierbaren Polyacetat-Urethan.

4. Leitung nach einem der vorhergehenden Ansprüche, **dadurch gekennzeichnet, dass** sie zwischen der Zwischenschicht und der Außenschicht eine Verbindungsschicht umfasst, die aus den Polyurethan-Klebern oder einer Mischung aus Polyphtalamid oder thermoplastischem Elastomer ausgewählt wird.

5. Leitung nach einem der vorhergehenden Ansprüche, **dadurch gekennzeichnet, dass** die Dicken der verschiedenen Schichten betragen:
- für die Innenschicht zwischen 0,05 und 0,5 mm mit einem bevorzugten Wert von 0,35 mm,
- für die Zwischenschicht zwischen 0,05 und 0,5 mm mit einem bevorzugten Wert von 0,2 mm,
- für die Außenschicht zwischen 0,05 und 0,65 mm mit einem bevorzugten Wert von gleich 0,35 mm,
- für die innerste Verbindungsschicht zwischen 0,05 und 0,2 mm mit einem bevorzugten Wert von 0,1 mm,
- und für die äußerste Verbindungsschicht zwischen 0,05 und 0,2 mm mit einem bevorzugten Wert von gleich 0,1 mm.
